# EUROPÄISCHE PATENTSCHRIFT

(11) **EP 1 758 801 B1**
(45) Veröffentlichungstag und Bekanntmachung des Hinweises auf die Patenterteilung: **02.12.2009**
(21) Anmeldenummer: 05740392.5
(22) Anmeldetag: 20.05.2005
(51) Int. Cl.: B65G 7/00, F16C 29/06

(54) **ROLLENELEMENT**
ROLLER ELEMENT
ELEMENT A ROULEAUX

(30) Priorität: 21.05.2004 CH 884042004
(43) Veröffentlichungstag der Anmeldung: 07.03.2007
(73) Patentinhaber: WRH Walter Reist Holding AG, 8272 Ermatingen (CH)
(72) Erfinder: REIST, Walter, CH-8340 Hinwil (CH)
(74) Vertreter: Frei Patent Attorneys
(86) Internationale Anmeldenummer: PCT/CH2005/000288
(87) Internationale Veröffentlichungsnummer: WO 2005/113391

(56) Entgegenhaltungen:
- EP-A- 0 838 602
- EP-A- 0 890 755
- DE-A- 2 620 864
- DE-B- 1 147 896
- DE-B- 1 269 952
- DE-C- 19 577
- DE-C- 488 310
- DE-U- 8 704 850
- FR-A- 1 116 656
- FR-A- 2 023 524
- FR-A- 2 279 969
- US-A- 2 644 691
- US-A- 3 091 189
- US-A- 4 702 623
- US-A- 4 921 361
- US-A- 5 434 938
- US-A- 5 456 182
- US-B1- 6 203 200

## Beschreibung

Die Erfindung liegt im Gebiet der Wälzlager und bezieht sich auf ein Rollenelement gemäss dem Oberbegriff des Patentanspruches 1.

Davon abgeleitete Ausführungsformen sind in den entsprechenden abhängigen Patentansprüchen definiert.

Bei Lagern stellt sich unter anderem das Problem, dass Lasten mit möglichst geringem Kraftaufwand und unter geringer Reibung bewegt werden sollen. Dabei soll die Konstruktion von Fördermitteln möglichst einfach sein. Zum Erreichen einer linearen, rotatorischen oder sonstigen geführten Bewegung zwischen Körpern werden Räder eingesetzt, die an einem ersten Körper befestigt sind und auf einem zweiten Körper rollen. Bei hohen Belastungen wird die Anzahl Räder erhöht. Das Problem der Reibungsminimierung bleibt aber bestehen und ist nun auf die Lagerung der Räder verschoben.

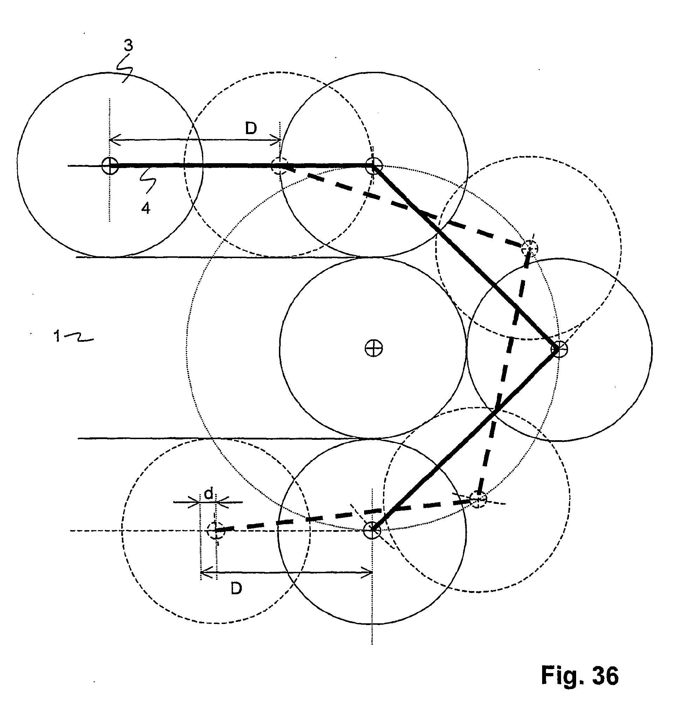

In der GB 403 082 aus dem Jahre 1932 wird eine Einrichtung zum Einsatz in Laufkatzen und Fahrgestellen gezeigt, bei welcher mehrere jeweils axial verbundene Paare von Schienenrädern um ein Paar von im oval geführten Schienen umlaufen. Dabei sind die Ebenen der beiden Schienenovale parallel zueinander. Die Achsen aufeinanderfolgender Radpaare sind durch Verbindungsglieder oder -Federn aneinander gekoppelt oder verkettet. Jedes Radpaar läuft einerseits auf den genannten oval geführten Schienen, und andererseits auf einem ortsfesten Schienenpaar oder auf den Kanten eines I-Trägers. Beim Umfahren der Endsegmente der Schienenovale variiert die ideale Kettenlänge je nach der Position der Räder. Dies wird durch Figur 36 veranschaulicht: Eine erste Position von Rädern 3 und Verbindungsgliedern 4 ist mit durchgezogenen Linien eingezeichnet. Wird das Rad links oben um einen Abstand D nach rechts verschoben, und bleiben alle Räder in Berührung mit dem Schienenoval, so ergibt sich eine zweite Position, strichliert eingezeichnet. Dabei verschiebt sich das unterste eingezeichnete Rad um eine Distanz, die um d kleiner ist als D. In der GB 403 082 ziehen die Federn die Kette von Radpaaren zusammen und bewirken einen Längenausgleich, um die Räder auf den oval geführten Schienen zu halten. Die beschriebene Konstruktion ist entsprechend dem Anwendungsbereich (Kranen, Eisenbahnen) auf sehr hohe Lasten ausgelegt, was zur gezeigten Wahl von Schienen und Schienenrädern führt.

Ferner zeigt die GB 387 403 Raupenketten für schwere Fahrzeuge wie fahrbare Geschütze. Die Raupenketten sind auf einzelnen Abschnitten ihrer Umlaufbahn auf mitlaufenden Rollen abgestützt. Die Rollen sind über ihre Achsen aneinander gekoppelt und laufen um einen Mittenkörper um. Zur Fortbewegung des Fahrzeugs werden die Raupenketten durch ein Treibrad angetrieben.

Die genannten Vorrichtungen aus der Fahrzeugtechnik können, da sie auf andere Anforderungen, insbesondere auf - absolut gesehen - hohe Lasten und grössere Dimensionen hin ausgelegt sind, nicht in effizienter Art in der Fördertechnik eingesetzt werden.

In AT 387 156 ist ein Grasski mit einem umlaufenden Rollenlaufwerk offenbart. In einer Ausführungsform sind die Rollen an einem Gliederband befestigt, wobei an dessen Gliedern Fortsätze ausgebildet sind, welche eine Führungsschiene untergreifen und dadurch die Rollen im Kontakt zur Führungsschiene halten. Es ist zu erwarten, dass die Anordnung verschleissanfällig ist.

US 6,203,200 beschreibt einen linear bewegbaren Schlitten in einer Werkzeugmaschine oder einem Präzisionsinstrument. Zur Lagerung des Schlittens verlaufen Rollenbänder in Kanälen zwischen dem Schlitten und einer Basis der Maschine. Die Rollenbänder bestehen aus einer Vielzahl von Lagerkugeln oder - Rollen, welche in einem Kunststoffband gehalten und voneinander beabstandet sind. Die Rollenbänder werden durch Umspritzen der Rollen mit einem Kunstharzmaterial und anschliessendem Aushärten gefertigt. Dadurch wird eine präzise Lagerung der Rollen im Rollenband erreicht. Das Rollenelement der US 6,203,300 entspricht dem Oberbegriff des Anspruchs 1. Gleichartige Rollenbänder sind auch in EP 0 890 755 A2 und EP 0 838 602 A1 offenbart.

Es ist deshalb Aufgabe der Erfindung, ein Rollenelement zu schaffen, welches zum Einsatz in der Fördertechnik geeignet ist. Insbesondere soll es eine gelagerte Relativbewegung zweier Körper bei kleiner Reibung erlauben und konstruktiv möglichst einfach gestaltet sein. Dabei soll es, verglichen mit beispielsweise einem Rad ähnlicher Grösse, hohe Belastungen ertragen, d.h. eine hohe Belastbarkeit bei relativ kleiner Bauweise ermöglichen.

Ein erfindungsgemässes Rollenelement weist einen Zentralkörper sowie einen Rollenkörper auf. Der Rollenkörper ist auf einer nicht kreisförmigen Umlaufbahn um den Zentralkörper verlaufend und bezüglich des Zentralkörpers durch Abrollen von Rollen des Rollenkörpers an einer Innenseite des Rollenkörpers am Zentralkörper bewegbar angeordnet. Dabei sind die Rollen als Kugeln oder im wesentlichen walzenförmig ausgestaltet, eine Umfangsfläche der Rollen ist zu einem wesentlichen Teil als Rollfläche korrespondierend mit dem Zentralkörper und zum Abrollen am Zentralkörper geformt, und der Rollenkörper weist in sich und/oder in seiner Beweglichkeit bezüglich des Zentralkörpers ein Spiel auf.

Durch einfache Form der Rollen in Verbindung mit dem zulässigen Spiel ist einerseits eine konstruktiv einfache Führung des Rollenkörpers um den Zentralkörper realisierbar, und wird andererseits eine kostengünstige Fertigung insbesondere des Rollenkörpers möglich. Der Rollenkörper kann also aus lose verbundenen Elementen bestehen und beispielsweise in einer umlaufenden Nut im Zentralkörper zuverlässig geführt werden. Im Gegensatz zum Stand der Technik wird das Spiel nicht durch Federn eliminiert sondern zugelassen oder sogar vergrössert und mit einer entsprechend robusten oder toleranten Führung kombiniert. Das Rollenelement weist also keine weiteren Elemente auf, die den Rollenkörper an den Zentralkörper heranziehen oder halten.

Durch eine Walzenform oder Tonnenform der Rollen; also eine im wesentlichen zylindrische oder auch kreiszylindrische Form, wird eine Auflagekraft auf eine Kontaktlinie zwischen der Walze und dem Gegenkörper verteilt. Die Rollfläche beträgt mindestens die Hälfte oder zwei Drittel der Umfangsfläche.

Das Spiel in Verbindung mit dieser Form erlaubt einerseits eine vergleichsweise lose Verbindung der sich gegeneinander bewegenden Elemente und andererseits doch das Abrollen am belasteten Abschnitt des Rollenkörpers, wobei die Belastung über die aneinander abrollenden Flächen verteilt wird. Weitere Elemente wie Achsen oder Verbindungsglieder des Rollenkörpers werden nicht wesentlich belastet oder gespannt, sie dienen nur dazu, die unbelasteten Rollen des Rollenkörpers um den Zentralkörper zu ziehen oder zu stossen, also voneinander zu distanzieren. Dank des Spieles des Rollenkörpers wird er dabei lose gezogen und geführt, so dass eine geringe Reibung und weder ein gegenseitiges Abschleifen noch Verkanten oder Verklemmen aufgrund geringer Toleranzen auftritt.

Das Spiel des Rollenkörpers bezüglich des Zentralkörpers ist erfindungsgemäß derart gross, dass sich der Rollenkörper an einer Stelle um mindestens 1/5 oder½ eines Rollendurchmessers vom Zentralkörper abheben lässt. Je nach den Dimensionen einer Führung des Rollenkörpers kann auch ein Abheben um bis zu einem ganzen Rollendurchmesser toleriert werden, jedoch immer nur derart weit - unter Berücksichtigung des Spiels des Rollenkörpers als ganzem in seitlicher respektive axialer Richtung - dass die Rollen die Führung nicht seitlich verlassen können.

Durch die nicht kreisförmige Umlaufbahn kann die Form des Zentralkörpers und damit der Umlaufbahn an eine Form des Gegenkörpers angepasst werden, und somit eine Auflagekraft über mehrere Rollen verteilt werden. Vorzugsweise sind die Rollen an einer Aussenseite des Rollenkörpers zum Abrollen an einem Gegenkörper vorgesehen.

Beim Abrollen des Zentralkörpers auf den Rollen und der Rollen wiederum auf dem weiteren Körper bewegt sich der Rollenkörper auf einer Umlaufbahn um den Zentralkörper herum. Dabei laufen die Rollen vorzugsweise in einer Führung des Zentralkörpers, beispielsweise in einer umlaufenden Nut. In einer bevorzugten Ausführungsform der Erfindung umfassen Führungselemente der Nut die Rollen seitlich. Wenn diese Führungselemente demontierbar sind, so kann die Montage des Rollenelements in besonders einfacher Weise geschehen: auf einer Seite des Zentralkörpers wird ein Führungselement noch nicht montiert. Der fertige, geschlossene Rollenkörper kann eingelegt werden und das Führungselement montiert werden. Es ist dabei also kein Öffnen und Schliessen des Rollenkörpers notwendig.

Erfindungsgemäß weist der Rollenkörper Mittel zur Erzielung eines gleichbleibenden Abstandes zwischen den Rollen auf. Dadurch wird verhindert, dass aufeinanderfolgende Rollen sich gegenseitig berühren, wodurch Reibungsverluste entstehen könnten.

Erfindungsgemäß ist das Mittel zur Erzielung eines gleichbleibenden Abstandes zwischen den Rollen ein Käfigband, welches Lagerachsen der Rollen miteinander verbindet. Dadurch wird die Konstruktion des Rollenkörpers, verglichen mit einer kettenartigen Verbindung der Rollen, vereinfacht. Die Verbindungen zwischen den einzelnen Rollen sind keinen wesentlichen Kräften ausgesetzt. Im Verhältnis zur möglichen Belastung des Rollenkörpers sind diese Kräfte gering.

Im Prinzip können die Rollen auch durch aussenliegende Lagerschalen geführt und voneinander beabstandet werden. Diese sind aus einer Konstruktion von gelenkig oder flexibel miteinander verbundenen einzelnen Lagerschalen gebildet und bilden einen beweglichen Lagerkäfig, im Folgenden auch Käfigband genannt. Dabei ist das Käfigband in einer bevorzugten Ausführungsform der Erfindung in mindestens zwei Richtungen biegbar. Es kann sich also nicht nur in einer ebenen Umlaufbahn bewegen, sondern auch entlang einer Umlaufbahn, die in einer gekrümmten Fläche verläuft. Damit können Rollenkörper ausgerüstet werden, die einer gekrümmten, insbesondere einer kreisförmigen Bahn um einen Kreismittelpunkt, der in Richtung der Rollenachsen vom Rollenelement entfernt ist, folgen.

In einer bevorzugten Ausführungsform der Erfindung ist zwischen dem Zentralkörper und dem Gegenkörper ein Laufband oder ein Raupenkettenband aus starren Elementen angeordnet, welches den Rollenkörper an seinem gesamten Umfang umschliesst, so dass das Rollenelement über das Laufband auf einem Gegenkörper abrollt. Dadurch werden Unebenheiten im Gegenkörper ausgeglichen, und es kann durch Verwendung geeigneter Materialien für das Band eine Adhäsion zwischen dem Rollenkörper und dem Gegenkörper erhöht werden.

In einer weiteren bevorzugten Ausführungsform bewegt sich der starre Gegenkörper nicht mit dem Rollenelement mit. Er kann beispielsweise eine Führungsschiene oder ein Körper mit einer Führungsnut sein, oder aber einfach eine ebene Fläche. Eine Belastung des Zentralkörpers in Richtung dieser Fläche wird direkt über die Rollen übertragen. Eine allfällige Lagerung der Rollen wird dabei nicht wesentlich belastet. Diese Rollenlager können also einfachster Weise als Gleitlager ausgeführt sein. Dadurch wird die Konstruktion insgesamt sehr einfach.

Typischerweise ist der Gegenkörper eine stationäre Unterlage oder eine Führungsschiene. Umgekehrt ist aber auch möglich, dass das Rollenelement bezüglich der Umgebung stationär befestigt ist und sich der Gegenkörper bewegt.

Die Form der Umlaufbahn ist vorzugsweise ein Oval mit halbkreisförmigen Endabschnitten, welche durch einen oberen und einen unteren geraden Abschnitt verbunden sind. Der untere gerade Abschnitt ist dem weiteren Körper zugewandt. Die ändern Abschnitte müssen nicht zwingend durch die beschriebenen Kreishälften und die Gerade gebildet sein, es genügt, wenn sie eine verlustarme Rückführung des Rollenkörpers auf sich selbst zulassen.

In weiteren bevorzugten Ausführungsformen der Erfindung liegen anstelle der geraden Abschnitte Kreissegmente mit einem gemeinsamen Mittelpunkt vor. Damit kann das Rollenelement als Lagerelement zwischen zwei kreisförmigen Lagerteilen angeordnet werden.

In einer weiteren bevorzugten Ausführungsform der Erfindung weist der Zentralkörper eine zweifach gekrümmte Umlaufbahn aufweist. Es weist insbesondere die Umlaufbahn nebst ersten Krümmungen, die zum Umlaufen der Rollen um den Zentralkörper erforderlich sind, und die im wesentlichen parallel zu Lagerachsen der Rollen verlaufen, eine weitere Krümmung auf, deren Achse im wesentlichen senkrecht zu Krümmungsachsen der ersten Krümmungen ist.

In noch einer weiteren bevorzugten Ausführungsform der Erfindung ist der Zentralkörper selber nicht starr, sondern weist mindestens zwei Teile auf, die gegeneinander flexibel aber begrenzt bewegbar sind. Dazu sind die Teile beispielsweise mit einem Federelement aus Kunststoff, Gummi oder Metall verbunden. Der somit in einem gewissen Mass flexible Zentralkörper kann sich also einem gekrümmten Gegenkörper anpassen. Dabei kann einerseits die Umlaufbahn der Rollen in einer Ebene liegen, wobei auch die Bewegung des Zentralkörpers bezüglich des Gegenkörpers in dieser Ebene bleibt. Andererseits können aber die Umlaufbahn und die erwähnte Bewegung ausserhalb einer Ebene, also in einer gekrümmten Fläche verlaufen. In einer solchen Ausführungsform der Erfindung ist das oben erwähnte in zwei Richtungen biegsame Käfigband sinnvoll einsetzbar.

In einer bevorzugten Ausführungsform der Erfindung weist eine Rolle jeweils ein Führungselement auf Dieses wird durch einen Einschnitt oder einen hervortretenden Teil der Rolle gebildet, beispielsweise durch eine in Drehrichtung der Rolle umlaufende Kerbe respektive Nut, oder aber durch eine Ausbuchtung respektive Rippe an der Rolle. Vorzugsweise ist mit einer Kerbe oder Nut der Rolle korrespondierend eine umlaufende Ausbuchtung oder eine Steg im Zentralkörper ausgebildet, oder umgekehrt zu einer Rippe einer Rolle eine Nut am Zentralkörper. Je nachdem, wie das Rollenelement eingesetzt wird, kann auch im weiteren Körper eine korrespondierende Führung ausgebildet sein.

Die Rollen weisen eine im wesentlichen rotationszylindrische Form auf. Vorzugsweise sind sie im wesentlichen zylindrisch mit konstantem Durchmesser, oder nach innen oder aussen bombiert respektive ausgebaucht zylindrisch, oder aber auch kugelförmig geformt. Auch bei diesen Formen kann die Form der Umlaufbahn am Zentralkörper und/oder die Form des weiteren Körpers korrespondierend ausgeformt sein.

Die einzelnen Komponenten des Rollenelements können mit verhältnismässig grossen Toleranzen und damit kostengünstig gefertigt werden, ohne dass die Betriebsfähigkeit verringert wird. Die Rollen sind vorzugsweise einstückig und aus einem harten Kunststoff geformt.

Das Rollenelement kann als ovales Wälz- oder Kugellager betrachtet werden, mit dem Vorteil, dass sich eine Last über mehrere Rollen verteilt, und die Anordnung insgesamt belastbarer als herkömmliche Lager mit ähnlichen Dimensionen gefertigt werden kann.

Das erfindungsgemässe Rollenelement ist ferner im Prinzip überall einsetzbar, wo gelagerte Rollen oder Räder auf ebenen oder regelmässig gekrümmten Flächen abrollen. So kann ein einzelnes Rollenelement in einer Schiene geführt laufen und mit einer Haltevorrichtung für einen zu fördernden Gegenstand, beispielsweise einer Klammer, versehen sein. Dabei können auch mehrere Rollenelemente hintereinander laufen und miteinander verkettet sein. Oder es können mehrere Rollenkörper an einem Fahrzeug anstelle von herkömmlichen Rädern angeordnet sein. In einer bevorzugten Ausführungsform der Erfindung sind mehrere Rollenelemente entlang einer Lagerbahn zwischen zwei Körpern verteilt und voneinander beabstandet angeordnet. Damit können mit begrenztem Materialaufwand hohe Lagerkräfte aufgenommen werden.

Aufgrund der einfachen Konstruktion kann das Rollenelement bei Bedarf klein ausgeführt werden. In einer beispielhaften Ausführungsform der Erfindung ist der Zentralkörper 2 cm bis 5 cm oder 10 cm lang und 1 cm bis 3 cm hoch und weisen die Rollen einen Durchmesser und/oder eine Länge von rund 7 mm bis einem oder zwei oder drei Zentimetern auf.

Weitere bevorzugte Ausführungsformen gehen aus den abhängigen Patentansprüchen hervor.

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine perspektivische Ansicht eines Rollenelements;
- Figur 2: eine Seitenansicht eines Rollenelements gemäss Figur 1;
- Figur 3: einen Querschnitt durch einen Teil eines Rollenelements aus der Ansicht gemäss Figur 2;
- Figur 4: einen Querschnitt durch einen Teil eines Rollenelement mit einem Band zur Distanzierung der Rollen;
- Figur 5: eine Seitenansicht eines Rollenelements gemäss Figur 4;
- Figur 6: verschiedene Formen von Rollen;
- Figuren 7 und 8: Querschnitte durch einen Teil eines Rollenelements in weiteren Ausführungsformen;
- Figur 9: schematisch die Funktionsweise einer weiteren Ausführungsform;
- Figuren 10 bis 12: weitere Ausführungsformen mit lose aneinandergelegten Rollen und Distanzelementen;
- Figur 13: eine weitere Ausführungsformen;
- Figur 14: eine Seitenansicht eines Rollenelements mit einem Laufband;
- Figur 15: einen Querschnitt durch einen Teil eines Rollenelements aus der Ansicht gemäss Figur 14;
- Figuren 16 und 17: Ausfühnmgsformen in Verbindung mit einem Greifer;
- Figuren 18 und 19: weitere Ausführungsformen;
- Figur 20: ein Rollenelement als Lagerelement;
- Figuren 21 und 22: weitere Ausführungsformen mit einem Laufband;
- Figuren 23 und 24: ein Rollenelement mit einem gekrümmten Zentralkörper;
- Figur 25: ein Detail einer Lagerung einer Rolle;
- Figuren 26 und 27: verkettete Rollenelemente;
- Figur 28: ein Rollenelement mit starren Auflagekörpern;
- Figur 29: verschiedene Ansichten eines Auflagekörpers;
- Figur 30: eine Ausführungsform eines Käfigbandes;
- Figur 31: ein Rollenelement mit einem Käfigband;
- Figur 32: eine weitere Ausführungsform eines Käfigbandes;
- Figur 33: ein weiteres Rollenelement mit einem Käfigband;
- Figur 34: das in Figur 33 verwendete Käfigband;
- Figur 35: seitlich der Rollen angeordnete Distanzierungskörper; und
- Figur 36: eine Bewegung einer Rollenkette um ein Ende eines Zentralkörpers.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

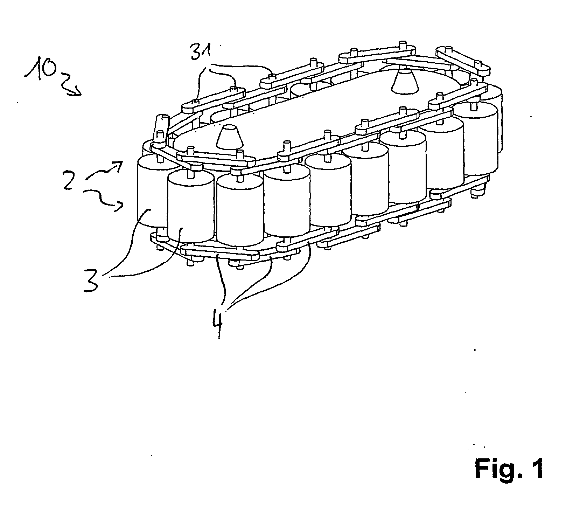

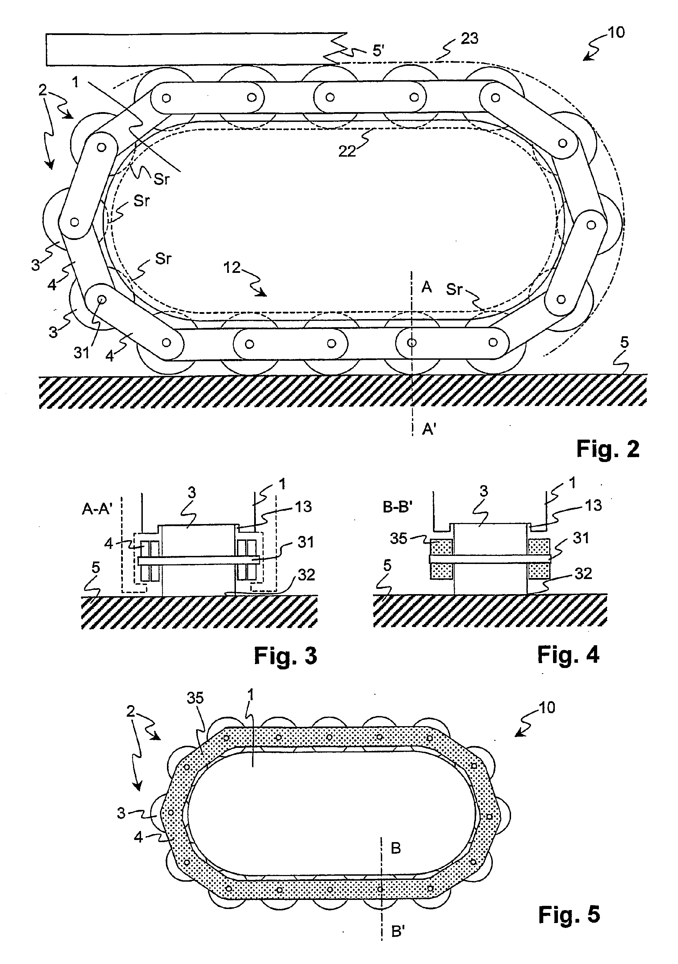

**Figur 1** zeigt eine perspektivische Ansicht und **Figur 2** schematisch eine Seitenansicht eines Rollenelements 10. Das Rollenelement 10 weist einen Zentralkörper 1 und einen um diesen umlaufenden Rollenkörper 2 auf. Der Rollenkörper 2 besteht aus einer Mehrzahl von Rollen 3, deren Lagerachsen 31 durch Kettengliedplatten 4 miteinander verbunden sind.

Die Kettengliedplatten 4 bilden zusammen mit den Rollen 3 eine Rollenkette. Die Durchmesser der Rollen 3 sind dabei bezüglich der Kettengliedplatten 4 so gross, dass die Rollen 3 nach innen wie auch nach aussen in radialer Richtung über die Kettengliedplatten 4 hinausragen. Damit bildet eine innen liegende Seite der Gesamtheit der Rollen 3 eine Innenseite 22 des Rollenkörpers 2. Entsprechend bildet eine aussen liegende Seite der Gesamtheit der Rollen 3 eine Aussenseite 23 des Rollenkörpers 2. Diese Innenseite 22 und Aussenseite 23 sind gedachte Einheiten und sind in der **Figur 2** strichliert eingezeichnet. An der Innenseite 22 können die Rollen 3 am Zentralkörper 1 abrollen, an der Aussenseite 23 an einem weiteren Körper, in der Folge Gegenkörper 5 genannt. Wenn die Seite des Zentralkörpers 1, die dem Gegenkörper 5 zugewandt ist, eine der Form des Gegenkörpers 5 korrespondierende Form aufweist, so verteilt sich eine Belastung des Zentralkörpers 1 in Richtung des Gegenkörpers 5 auf mehrere Rollen 3. Hier gezeigt ist ein ebener Gegenkörper 5 und korrespondierend ein geradliniger Abschnitt 12 des Zentralkörpers 1. Bei einer Verschiebung des Zentralkörpers 1 in der Zeichnungsebene parallel zum Gegenkörper 5 rollt der Zentralkörper 1 über die Rollen 3 am Gegenkörper 5 ab. Dabei bewegt sich der Rollenkörper 2 in einer Umlaufbahn 21 um den Zentralkörper 1 herum. An einigen Stellen des Rollenkörpers 2 liegen die Rollen 3 nicht am Zentralkörper 1 an sondern sind um ein Radialspiel Sr von diesem entfernt. Wo und wann das Radialspiel auftritt, hängt von der Bewegungsrichtung und -Geschwindigkeit sowie zufälligen Bewegungen, die von Unregelmässigkeiten hervorgerufen werden, ab. Eine Kraft bezüglich dem Gegenkörper 5 kann am Zentralkörper 1 angreifen, so dass der Zentralkörper 1 als durch den Rollenkörper 2 gelagert betrachtet werden kann. Oder eine Kraft kann an einem zweiten Gegenkörper 5' angreifen, welcher dem Gegenkörper 5 bezüglich des Rollenelements 10 gegenüberliegt und am Rollenelement 10 abrollt, und somit durch das Rollenelement 10 bezüglich dem ersten Gegenkörper 5 gelagert ist. Ein Teil eines zweiten Gegenkörpers 5' ist in der Figur 2 links oben schematisch eingezeichnet.

**Figur 3** zeigt einen Querschnitt A-A' durch einen Teil eines Rollenelements 10 gemäss Figur 1. Es wird sichtbar, wie die Rollen 3 in einer Führungsnut 13 des Zentralkörpers 1 verlaufen und durch diese in axialer Richtung gehalten werden. Die Führungsnut 13 verläuft abschnittsweise oder vollständig entlang der Umlaufbahn 21 des Rollenkörpers 2. Wie strichliert eingezeichnet kann der Zentralkörper auch die Kettenglieder oder ein Rollenband gemäss der **Figur 4** mit umschliessen.

**Figur 4** zeigt einen Querschnitt B-B' durch einen Teil eines Rollenelements 10 mit einem flexiblen Band oder Lagerband 35 anstelle von Kettengliedplatten 4 zur Distanzierung der Rollen gemäss Figur 5. Das Lagerband 35 ist in gleichmässigen Abständen mit Löchern zur Aufnahme der Lagerachsen 31 versehen. **Figur 5** zeigt eine entsprechende Seitenansicht.

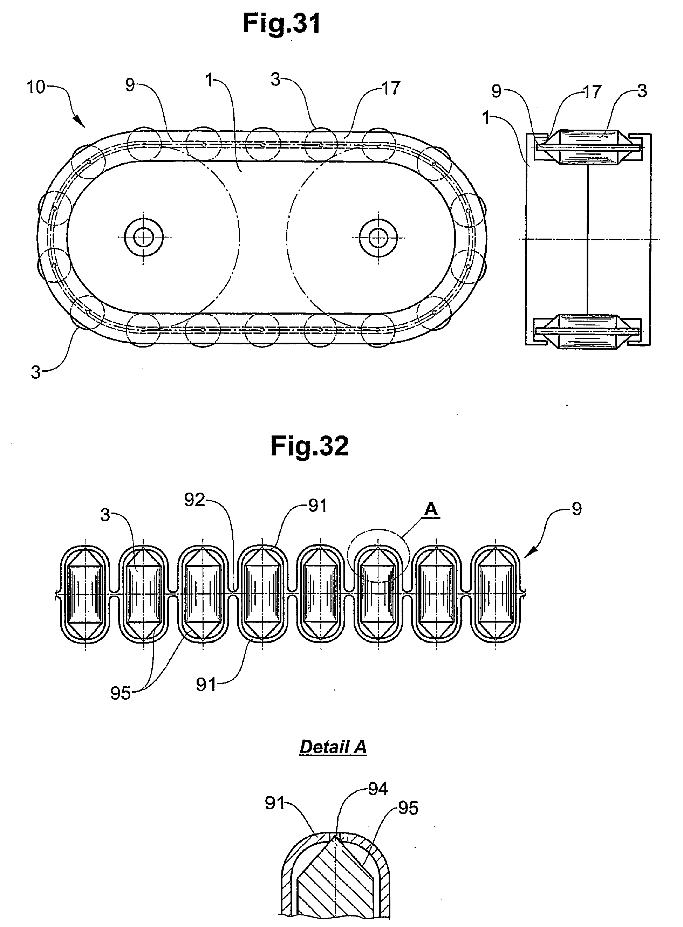

**Figur 31** zeigt ein Rollenelement 10 mit einem Käfigband 9. Die **Figur 32** zeigt das in **Figur 31** verwendete Käfigband 9. Das Käfigband 9 besteht aus einem flexiblen Material, vorzugsweise einem Kunststoff wie Nylon. Es weist einerseits ringartige Haltebereiche 91 auf, in welche die Rollen 3 eingesetzt sind, und andererseits Gelenkbereiche 92, welche die Haltebereiche 91 flexibel miteinander verbinden. Das Käfigband 9 ist vorzugsweise einstückig. Die Rollen 3 sind ebenfalls aus Kunststtoff oder aber aus Metall, insbesondere Stahl gefertigt. In dieser Ausführungsform der Erfindung sind die Rollen 3 in Achsrichtung konisch und spitz zulaufend, wodurch konische Achselemente 95 gebildet werden. An den Innenseiten der Haltebereiche 91 sind jeweils einander gegenüberliegend entsprechende Innenkonusse als Lagerstellen 94 geformt. Diese Innenkonusse bewirken eine Lagerung für die Rollen 3. Anstelle von konischen Elementen kann natürlich auch eine andere Form für die Lagerung verwendet werden, beispielsweise eine zylindrische. Die Verbindung durch die Gelenkbereiche 92 ist, in Laufrichtung der Rollen 3 betrachtet, zumindest annähernd bei der Mitte der Rollen 3 angeordnet. Ein solches Käfigband 9 lässt sich innerhalb einer Ebene senkrecht zu den Rollenachsen biegen, und kann so mit einem Zentralkörper 1 gemäss beispielsweise der **Figur 31** verwendet werden.

Dank der mittigen Verbindung durch die Gelenkbereiche 92 ist das Käfigband 9 aber auch aus dieser Ebene heraus biegbar, so dass der Zentralkörper 1 nicht eine ebene Umlaufbahn 21 aufweisen muss. Ferner ist das Käfigband 9 durch die Gelenkbereiche 92 tordierbar und somit kann auch der Rollenkörper 2 einer Bahn, die eine Torsion des Rollenkörpers 2 bedingt, folgen. Ein solches Käfigband 9 lässt sich also vielseitig einsetzen und kann dazu auf einfache Weise in grossen Stückzahlen hergestellt werden.

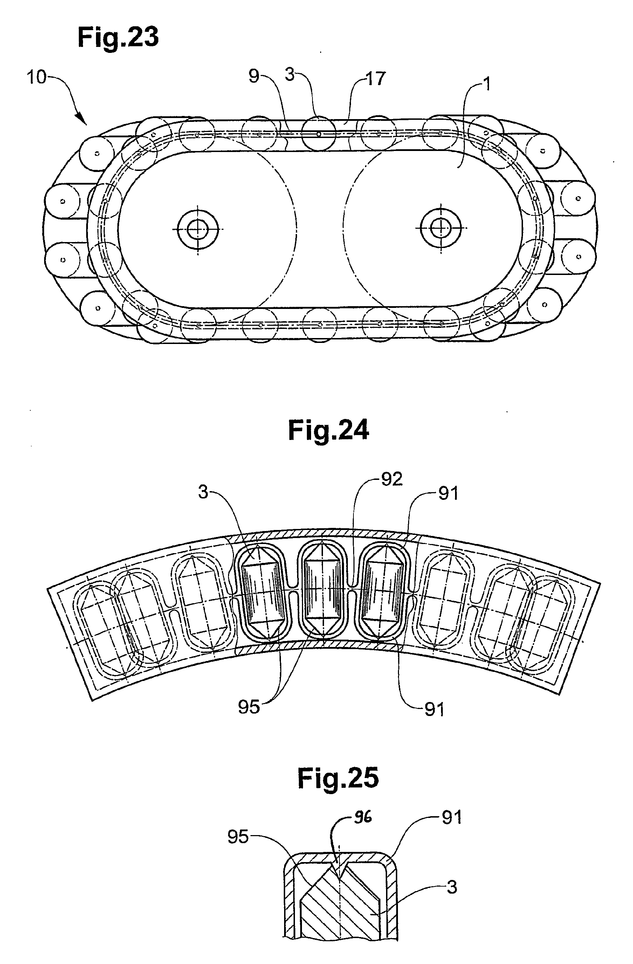

**Figur 25** zeigt eine alternative Ausführungsform der Lagerung einer Rolle 3 im Haltebereich 91. Die Rollen 3 weisen in dieser Ausführungsform also zwei Einbuchtungen zur Lagerung auf, wobei diese Einbuchtungen auch durch ein durchgehendes Loch entlang der Rollenachse gebildet sein können. Der Haltebereich 91 des Verbindungskörpers 9 weist gegenüberliegende Lagervorsprünge 96 auf, die beim Einsetzen der Rollen 3 in die Einbuchtungen einschnappen. Um dies zu vereinfachen sind die Lagervorsprünge 96, wie auch die Achselemente 95 der vorherigen Ausführungsform, vorzugsweise sich verjüngend und insbesondere spitz zulaufend ausgestaltet.

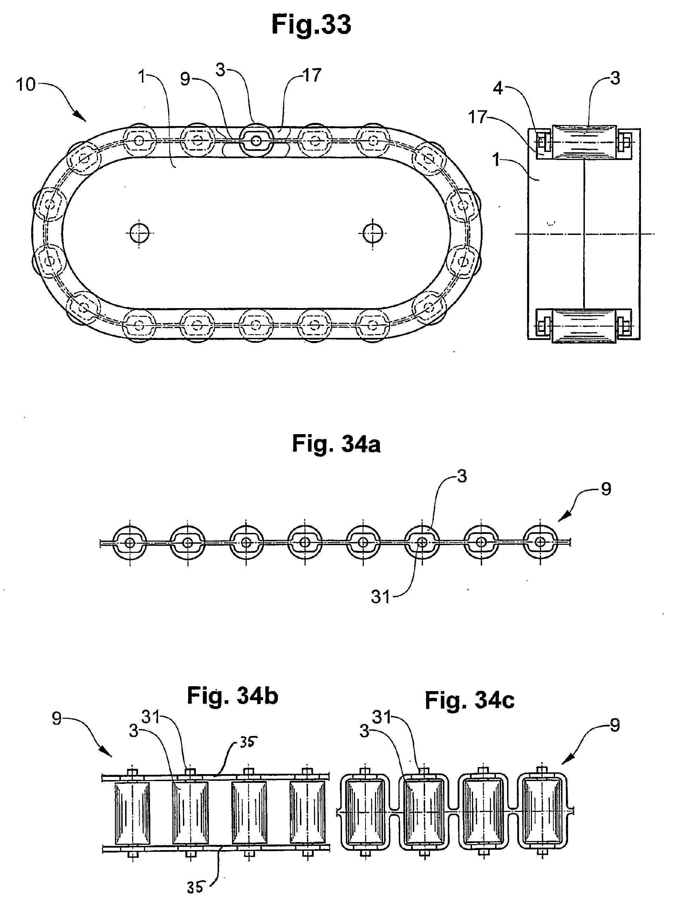

**Figur 33** **zeigt** ein erfindungsgemäßes Rollenelement 10 mit einem Käfigband 9, und **Figur 34a** zeigt dieses Käfigband 9 in einer separaten Ansicht. Das Käfigband 9 weist im Bereich der Lagerachsen 31 beiderseits der Rollen 3 Lageröffnungen oder Vertiefungen zur Aufnahme der hervorstehenden Lagerachsen 31 auf. In einer Variante mit einer Aufsicht gemäss der **Figur 34b** weist das Käfigband 9 zwei separate Hälften oder Lagerbänder 35 auf, welche jeweils die Lagerachsen 31 an beiden Seiten des Rollenkörpers 2 verbinden. Dadurch ist der Rollenkörper 2 als ganzes nur in eine Richtung biegbar. Damit der Rollenkörper 2 nicht auseinanderfällt und gleichwohl der Rollenkörper 2 zusammengesetzt werden kann, liegen die Lagerachsen 31 mit einem Presssitz in den Lagerbändern und sind die Rollen 3 um die Lagerachse 31 lose drehbar. In der Variante gemäss der **Figur 34c** ist wie bei den bisherigen Ausführungsformen eine Biegung in zwei Richtungen möglich. Auch hier können die Lagerachsen 31 mit einem Presssitz im Verbindungskörper 9 befestigt sein. Es können aber auch die Lagerachsen 31 fest an die Rollen 3 angeformt sein und lose in den Haltebereichen 91 des Verbindungskörpers 9 liegen.

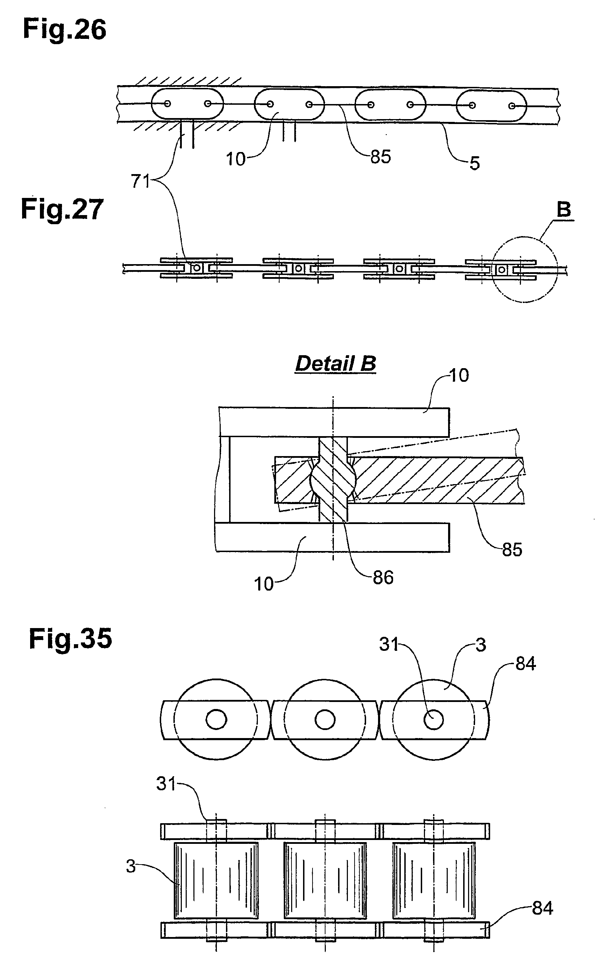

**Figur 35** zeigt getrennte, beiderseits der Rollen 3 angeordnete seitliche Distanzierungskörper 84. Es können damit nur Druckkräfte, aber keine Zugkraft zwischen den Distanzierungskörpern 84 übertragen werden. Die seitlichen Distanzierungskörper 84 laufen in einer Lagernut 14 zur radialen Bewegungsbegrenzung um den Zentralkörper 1 und dienen sowohl zur Lagerung als auch zu Beabstandung der Rollen 3. Die aneinander stossenden Enden der Distanzierungskörper 84 sind vorzugsweise Zylindersegmentflächen, wobei deren Zylinderachse mit der Lagerachse 31 zusammenfällt. Dadurch können sich die Enden aufeinanderfolgender Distanzierungskörper 84 aneinander abwälzen. Dies ermöglicht insbesondere bei Richtungsänderungen eine leichte Bewegung des Rollenkörpers 2.

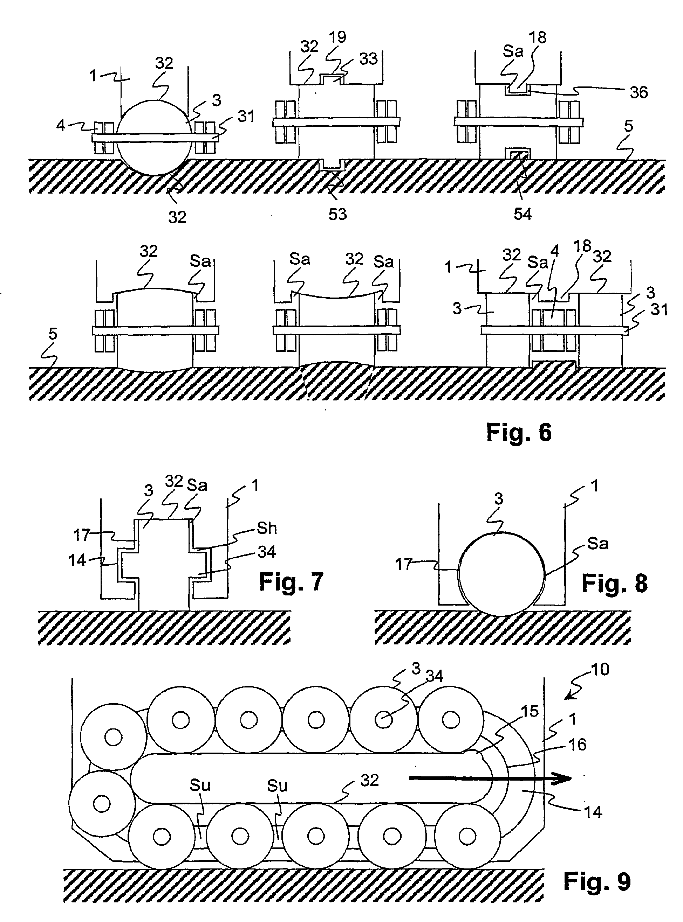

**Figur 6** zeigt verschiedene Formen von Rollen 3. Die Rollen 3 können also als Kugeln oder als Zylinder mit konstantem Durchmesser ausgebildet sein, die Zylinder können aber auch nach innen oder aussen bombiert respektive ausgebaucht sein. Dies ist je nach Anwendung von Vorteil. Beispielsweise erlauben die bombierten Formen eine Kippbewegung des Zentralkörpers 1 bezüglich des Gegenkörpers 5.

Die Rollen 3 können auch kammartige Führungselemente 33 aufweisen, die mit entsprechenden nutenartigen Führungselementen 13, 53 des Zentralkörpers 1 und des Gegenkörpers 5 korrespondieren. Umgekehrt können auch die Rollen 3 nutenartige Führungselemente 36 aufweisen und entsprechend der Zentralkörper 1 und/oder der Gegenkörper 5 steg- oder kammartige Führungselemente 18, 54. Durch die korrespondierenden Führungselemente 13, 33, 53, 18, 36, 54 respektive durch die Verwendung von bombierten oder kugelförmigen Rollen 3 können seitliche Kräfte aufgenommen werden und wird ein Abweichen der Bewegung des Rollenkörpers 2 von der entsprechenden Führungsrichtung der Führungselemente verhindert.

Die Dimensionen der korrespondierenden Führungselemente sind derart gewählt, dass ein seitliches oder axiales Spiel Sa zwischen Rollen 3 und Zentralkörper 1 respektive dessen Führungselementen resultiert.

In einer weiteren Ausführungsform weist eine Rolle 3 zwei koaxiale Rollenhälften auf, die durch eine Achse verbunden sind. Die Kettenglieder 4 zur Verbindung der Achsen von benachbarten Rollen 3 sind dabei an der Achse 31 zwischen den Rollenhälften befestigt.

In einzelnen der gezeigten Formen ist der Anteil der jeweiligen Rollfläche 32 an der Umfangsfläche sichtbar. Im Querschnitt durch eine Rolle 3 ist die Umfangsfläche im Wesentlichen proportional zur Länge der Rolle 3, und ist die Rollfläche 32 proportional zur Berührungslinie, auf welcher die Rolle 3 am Zentralkörper 1 abrollt. Bei einer Rolle oder Walze ohne eingeformte Führungselemente ist die Rollfläche 32 gleich der Umfangsfläche. Falls Führungselemente an der Rolle 3 und/oder am Zentralkörper 1 vorhanden sind, ist die Rollfläche 32 entsprechend kleiner, aber bevorzugt stets grösser als die Hälfte oder 2/3 oder 3/4 der Umfangsfläche.

Bei den in **Figur 6** gezeigten und in weiteren Ausführungsformen kann jeweils eine umlaufende Kette aus Kettengliedplatten 4 durch ein Lagerband 35 ersetzt werden.

**Figur 7** zeigt einen Querschnitt durch ein Rollenelement 10 einer weiteren Ausführungsform. In dieser Ausführungsform besteht der Rollenkörper 2 nur aus den Rollen 3, ohne dass Verbindungsglieder zwischen den Rollen 3 vorliegen. Dabei weisen die Rollen 3 jeweils beidseits axial mittig vorstehende Lagerzapfen 34 auf. Korrespondierend weist die Führungsnut 13 des Zentralkörpers 1 ebenfalls in axialer Richtung eingelassene und entlang der Umlaufbahn 21 verlaufende Lagernuten 14 auf und bildet damit eine Förderbahn 17 für die Rollen 3. Die Lagernuten 14 sind zur Aufnahme und Halterung der Rollen 3 vermittelst der Lagerzapfen 34 ausgebildet. Die Rollen 3 sind dadurch also entlang der Umlaufbahn 21 um den Zentralkörper 1 verschiebbar oder rollbar. Die Lagerzapfen 34 weisen ein axiales Spiel Sa und in radialer Richtung ein Spiel Sh bezüglich der Lagernuten 14 auf, so dass die Rollen 3 über eine Rollfläche 32, also der Zylinderperipherie, auf dem Zentralkörper 1 abrollen.

**Figur 8** zeigt eine Variante dieser Ausführungsform, wobei die Rollen 3 Kugeln sind, die in einer umlaufenden Förderbahn 17 beweglich angeordnet sind. Die Förderbahn hat dabei die Form einer umlaufenden und die Kugeln im Querschnitt umschliessenden Aussparung aus dem Zentralkörper 1.

**Figur 9** zeigt schematisch die Funktionsweise der weiteren Ausführungsform gemäss **Figur 7****.** Diese kann sinngemäss auf die Variante gemäss **Figur 8** übertragen werden. Es ist der Zentralkörpers 1 mit Rollen 3 im Querschnitt dargestellt, wobei die innere Kante 16 der Lagernut 14 und der Verlauf der Rollfläche 32 sichtbar werden. Um zu gewährleisten, dass die Rollen 3 im belasteten Bereich einen gewissen Abstand respektive ein Spiel in Umfangsrichtung Su voneinander aufweisen, weist einerseits das Rollenelement 10 nicht ganz soviele Rollen 3 auf, wie entlang der Umlaufbahn 21 Platz hätten, und andererseits Mittel, um den Eintritt einer Rolle 3 in den belasteten Bereich zu verzögern. In der vorliegenden Ausführungsform wird angenommen, dass der Zentralkörper 1 mit einer gleichbleibenden Orientierung bezüglich der Schwerkraft bewegt wird. Dann wird ein Verzögerungsmittel durch ein nach oben vorstehendes Hindernis in der Umlaufbahn 21 gebildet, im Folgenden Bremsnase 15 genannt. Beim Abrollen des Rollenelements 10, in der Figur beispielhaft in Pfeilrichtung nach rechts, werden auf der linken Seite die entlasteten Rollen durch die letzte noch belastete Rolle 3 nach oben und über den Zentralkörper 1 nach rechts geschoben. Die Bremsnase 15 verhindert, dass eine oben ganz rechts liegende Rolle 3 ohne weiteres nach unten rutscht und in den belasteten Bereich eintritt. Erst wenn die nachfolgenden Rollen 3 diese Rolle über die Bremsnase 15 schieben, fällt sie - beidseitig geführt durch die Lagernut 14 - nach unten und wird vom Zentralkörper 1 überrollt. In der **Figur 9** ist die Bremsnase 15 in der Rollfläche 32 ausgestaltet, sie kann aber stattdessen auch eine Ausbuchtung in der Lagernut 14 sein. Die Anzahl der Rollen 3 und die Geometrie der Umlaufbahn 21 sind derart gestaltet, dass dies erst in einer Lage geschieht, wenn sich die vorangehende Rolle 3 ein Stück weit im belasteten Bereich befindet.

Für eine Bewegung in der Gegenrichtung ist am anderen Ende des Zentralkörpers 1 ebenfalls eine Bremsnase 15 an der Rollfläche 32 respektive der innere Kante der Lagernut 16 ausgeformt.

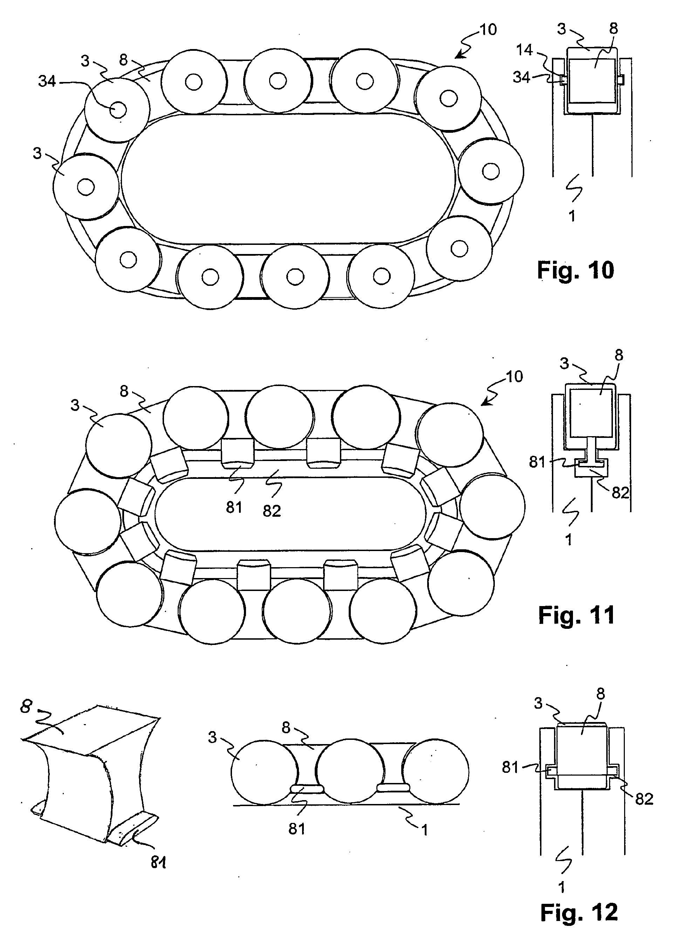

**Figuren 10, 11** und **12** zeigen weitere Ausführungsformen, bei welchen lose eingelegte Distanzhalter oder Distanzierungskörper 8 zur Beabstandung der Rollen 3 dienen. Die Figuren zeigen jeweils schematisch eine Ansicht von Rollen 3 und Distanzierungskörpern 8 in axialer Richtung, wobei eine Hälfte des Zentralkörpers 1 entfernt ist, sowie einen Querschnitt derselben in einem Ausschnitt des Zentralkörpers 1. Die in diesen Figuren gezeigten Rollen 3 sind zylindrisch, und korrespondierend weisen die zwischen den Rollen 3 eingelegten Distanzierungskörper 8 konkave zylindrische Flächen auf, deren Radius im wesentlichen gleich dem Rollenradius ist. Bei tonnen- oder kugelförmigen Rollen, oder bei Rollen mit einer Nut oder einem Kamm, sind auch die korrespondierenden Flächen der Distanzierungskörper 8 entsprechend geformt.

In der Ausführungsform gemäss **Figur 10** weisen die Rollen 3 Lagerzapfen 34 auf, welche in einer umlaufenden Lagernut 14 des Zentralkörpers 1 verlaufen und ein Herausfallen der Rollen 3 in radialer Richtung verhindern. Die Distanzierungskörper 8 werden lediglich aufgrund des Formschlusses mit den Rollen 3 gehalten und weisen keine Halteelemente in Verbindung mit dem Zentralkörper 1 auf.

In der Ausführungsformen gemäss **Figur 11** und **12** weisen umgekehrt die Distanzierungskörper 8 Haltenasen oder Haltenocken 81 auf, welche in axialer Richtung hervorstehen und in entsprechenden umlaufenden Führungselementen oder Nuten 82 des Zentralkörpers 1 geführt sind. Dadurch sind die Distanzierungskörper 8 um den Zentralkörper 1 herum verschiebbar und ist ihre Bewegung in radialer Richtung begrenzt. Die Rollen 3 weisen keine eigenen Halteelemente auf und werden durch die sie teilweise umfassenden Distanzierungskörper 8 in radialer Richtung gehalten.

In der Ausführungsform gemäss **Figur 11** sind Haltenasen 81 durch einen Steg, mit welchem sie die Form eines umgekehrten "T" bilden, am Distanzierungskörper 8 ausgebildet und sind jeweils in einer umlaufenden Nut 82 geführt, welche im Zentralkörper 1 und in radialer Richtung gesehen unterhalb der Rollen 3 verläuft. Diese Ausführungsform erlaubt eine schmale Bauweise des Rollenelements.

In der **Figur 12** ist nebst einem Querschnitt nur ein Ausschnitt eines Rollenelements 10 gezeichnet, und dafür eine perspektivische Ansicht eines entsprechenden Distanzierungskörpers 8 gezeigt. In dieser Ausführungsform stehen Haltenasen 81 eines Distanzierungskörpers 8 beiderseits (in Bewegungsrichtung gesehen) des Distanzierungskörpers 8 hervor und sind jeweils in einer umlaufenden Nut 82 geführt, welche im Zentralkörper 1 und in radialer Richtung gesehen auf der Höhe der Rollen 3 verläuft. Diese Ausführungsform erlaubt eine einfache und robuste Konstruktion der Distanzierungskörper 8.

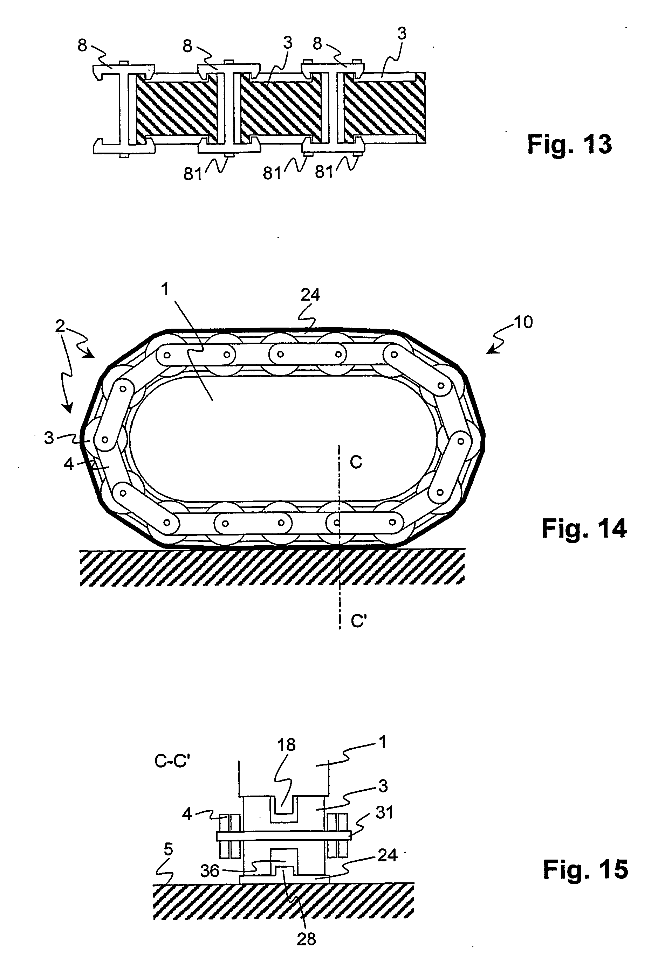

**Figur 13** zeigt eine weitere Ausführungsform, in welcher die Distanzierungskörper 8 an zwei Seiten als Klammern ausgebildet sind, welche in innenzylindrische Ausnehmungen der Rollen 3 eingreifen. Die Rollen 3 sind im Querschnitt entlang ihrer Achse abgebildet, so dass dieser Eingriff sichtbar wird. Die Distanzierungskörper 8 weisen vorzugsweise in der Mitte, wie im linken Distanzierungskörper 8 gezeigt, oder an den äusseren Enden, wie im rechten Distanzierungskörper 8 gezeigt, Haltenasen 81 auf.

**Figur 14** zeigt eine Seitenansicht eines Rollenelements 10 mit einem Laufband 24. Das Laufband 24 verläuft entlang der gesamten Aussenseite 23 des Rollenkörpers 2 und umschliesst diesen. Das Laufband 24 kann aus einem flexiblen Material wie Kunststoff oder Gummi, als Riemen oder Zahnriemen oder entsprechend einer Raupenkette aus starrem Material ausgebildet sein.

**Figur 15** zeigt einen Querschnitt C-C' durch einen Teil eines Rollenelements 10 aus der Ansicht gemäss **Figur 10****.** Dabei weist die Rolle 3 eine in Drehrichtung umlaufende Nut als Führungselement 36 auf. In die Nut 36 ragt einerseits ein Führungssteg 18 des Zentralkörpers 1 und andererseits ein Führungssteg 28, der am Laufband 24 angeformt ist.

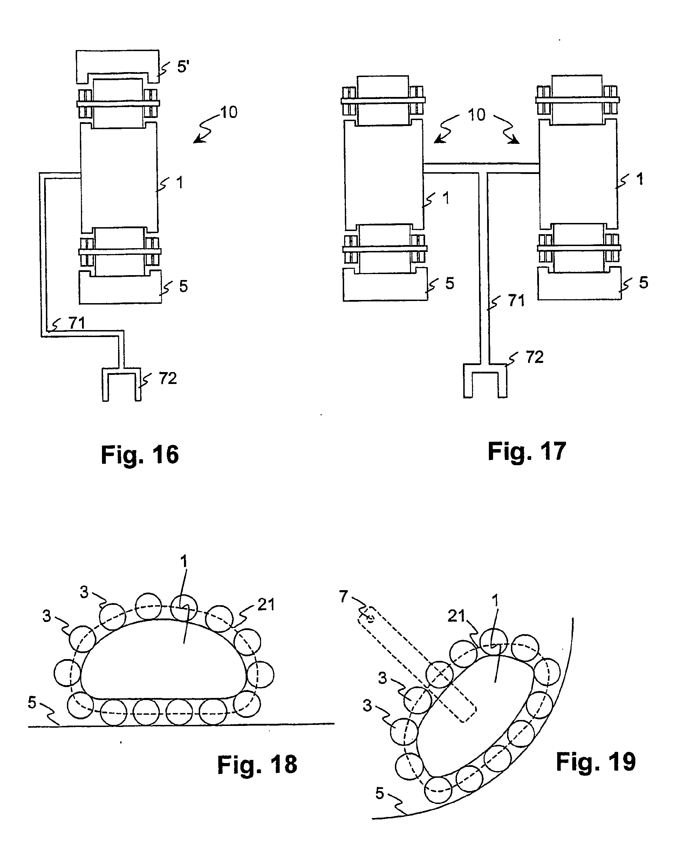

**Figuren 16** und **17** zeigen schematisch und im Querschnitt Ausführungsformen in Verbindung mit einem Greifer 72. In **Figur 16** ist ein Rollenelement 10 in einem als Schiene ausgestalteten Gegenkörper 5 auf einer Seite gelagert und wird auf der gegenüberliegenden Seite durch einen weiteren Gegenkörper 5' stabilisiert. Der weitere Gegenkörper 5' ist hier mit dem Gegenkörper 5 fest verbunden und rollt nicht wie in der Figur 2 am Rollenkörper 2 ab. Am Rollenelement 10 ist ein Arm 71 befestigt, der einen Greifer 72 trägt. Gemäss **Figur 17** sind zwei seitlich versetzt angeordnete und in zugeordneten Schienen 5 geführte Rollenelemente 10 durch einen Arm 71 verbunden.

**Figuren 18** und **19** zeigen schematisch weitere Ausführungsformen: Es ist nicht zwingend notwendig, dass die Rollen 3 auf einer ovalen Umlaufbahn 21 verlaufen. **Figur 18** zeigt einen stückweise geraden und ansonsten gekrümmten Verlauf der Umlaufbahn 21. **Figur 19** zeigt einen Verlauf ohne geradlinige Abschnitte, bei welchem ein Teil der Umlaufbahn 21 eine Krümmung aufweist, die mit einer Krümmung des Gegenkörpers 5 korrespondiert, welcher eine kreisförmige Kontaktfläche zum Rollenelement 10 bildet. Dabei kann das Rollenelement 10 durch einen Hebel um eine Drehachse 7 drehbar angeordnet sein. Umgekehrt kann in einer anderen Ausführungsform auch die Umlaufbahn 21 stellenweise nach innen gekrümmt ausgeformt sein, so dass das Rollenelement 10 aussen an einer Kreiszylinderfläche abrollen kann.

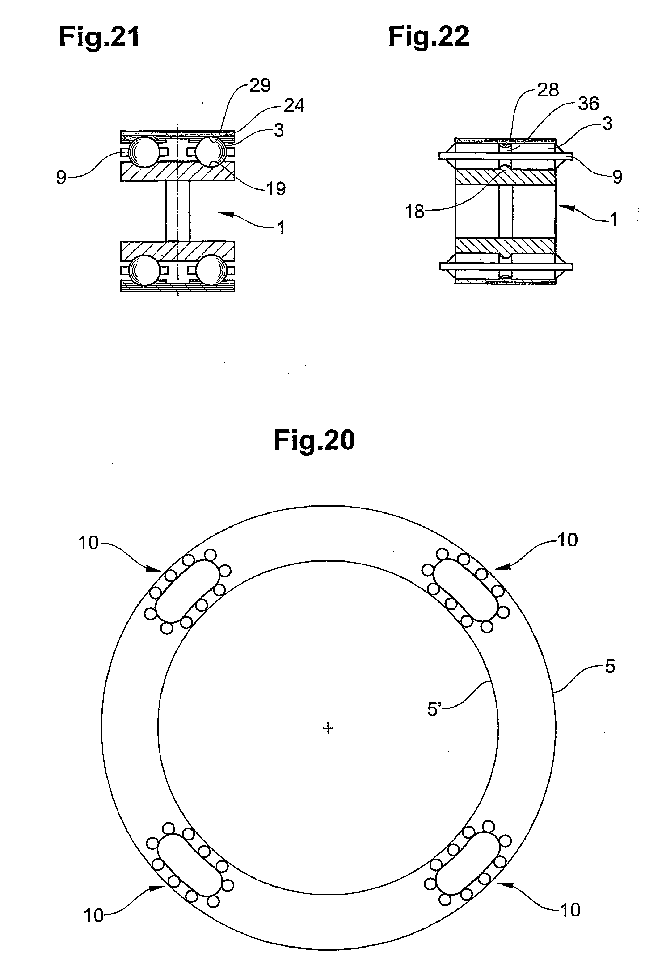

**Figur 20** zeigt schematisch Rollenelemente 10, die als Lagerelemente verwendet werden. Dabei sind mehrere Rollenelemente 10 zwischen zwei gegeneinander zu lagernden Körpern 5, 5' angeordnet, welche also über die Rollenelemente 10 aneinander abrollen können. Bei ringförmigen Lagern können so vergleichsweise hohe Kräfte mit geringem Aufwand aufgenommen werden. Dabei werden mindestens drei Rollenelemente 10 um den Umfang des Lagers zwischen kreiszylindrischen, konzentrischen Flächen der Körper 5, 5' gleichmässig verteilt.

**Figuren 21** und **22** zeigen weitere Ausführungsformen mit einem Laufband 24. Gemäss **Figur 21** rollt das Laufband 24 an zwei parallelen Reihen von Rollen 3 ab, welche durch einzelne Käfigbänder 9 oder ein gemeinsames Käfigband 9 gehalten und geführt werden. Die Rollen 3 können dabei, wie im Zusammenhang mit der **Figur 32** erklärt, geformt und gelagert sein, oder, wie in der **Figur 21** als Kugeln in einem Käfigband 9 gefangen sein. Der Zentralkörper 1 und das Laufband 24 weisen mit den Form der Rolle 3 korrespondierende Führungsrillen 19, 29 auf. Gemäss der **Figur 22** ist der Rollenkörper 2 mit einem Käfigband 9 ähnlich jenem der **Figur 32** ausgeführt. Die Rollen 3 weisen eine Führungsnut 36 auf, und korrespondierend weisen der Zentralkörper 1 einen Führungssteg 18 und das Laufband 24 einen Führungssteg 28 auf.

**Figuren 23** und **24** zeigen ein Rollenelement 10 mit einem gekrümmten oder gebogenen Zentralkörper 1. Die Umlaufbahn 21 und damit auch der Rollenkörper 2 ist hier zweifach gekrümmt. Zur seitlichen Führung der Rollen 3 kann eine der Anordnungen gemäss der **Figur 6** verwendet werden, oder es kann wie im Querschnitt D-D' gemäss **Figur 25** eine mittig verlaufende Kette oder ein Band zur Verbindung der Lagerachsen 31 in einer Führungsrille 19 des Zentralkörpers 1 geführt sein. Es liegt also keine Umlaufebene mehr vor, sondern eine Bewegung der Rollenmittelpunkte in einer gekrümmten Fläche. Dabei sind die Achsen der Rollen 3 senkrecht zu dieser Fläche und somit je nach ihrer Position auf der Umlaufbahn 21 nicht parallel zueinander. Die Bewegung in dieser Bahn wird dadurch erleichtert, dass der Rollenkörper 2 und der Zentralkörper 1 in radialer Richtung und in axialer Richtung ein Spiel gegeneinander aufweisen. Mehrere solcher Rollenelemente 10 können in einem ringförmigen Lager ähnlich wie in der **Figur 20** angeordnet sein. Die Rollenelemente 10 liegen dabei zwischen übereinander angeordneten Lagerringen mit gleichem Durchmesser und dienen zur Aufnahme von Kräften vor allem senkrecht zur Ebene des Ringes.

**Figuren 26** und **27** zeigen verkettete Rollenelemente 10. Jeweils zwei Rollenelemente 10 sind durch ein Verbindungsglied 85 beweglich miteinander verbunden. Ein Rollenelement 10 weist vorzugsweise jeweils zwei parallel angeordnete Rollenkörper 2 mit jeweils einem eigenen Zentralkörper 1 auf. Die beiden Zentralkörper 1 sind in der Mitte miteinander und beispielsweise auch mit einem Tragarm 71 verbunden. An den beiden Enden ist zwischen den Zentralkörpern 1 jeweils eine gelenkige Befestigung zu einem Verbindungsglied 85 angeordnet. Die Befestigung ist auch in einer Detailansicht der Figur 27 gezeigt. Sie besteht aus einem Verbindungssteg 86 zwischen den Zentralkörper 1, an welchem ein Verbindungsglied 85 mittels eines Kugelgelenkes befestigt ist.

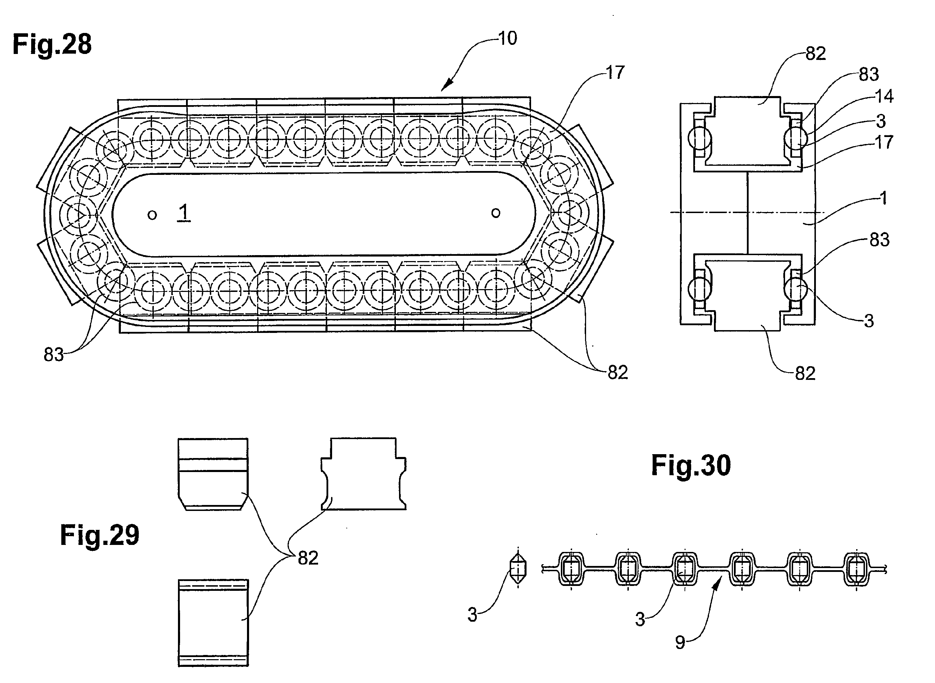

**Figur 28** zeigt ein Rollenelement 10 mit starren Auflagekörpern 82. Die Auflagekörper 82 verlaufen in der Förderbahn 17 und sind seitlich durch eine Folge von kugelförmigen Rollen 3 in Lagernuten 14 der Förderbahn 17 gelagert. Die Rollen 3 tragen jeweils einen Rollenring 83 zur Distanzierung. Die Rollenringe 83 sind beispielsweise einstückig aus Kunststoff gefertigt, und weisen eine Innenfläche entsprechend einer Kugelfläche auf, so dass die Kugeln in die Ringe 83 eingeknipst werden können. **Figur 29** zeigt verschiedene Ansichten eines Auflagekörpers 82.

**Figur 30** zeigt eine angepasste Ausführungsform eines Käfigbandes 9, und eine einzelne darin einsetzbare Rolle 3 als Alternative zu den Rollenringen der **Figur 28****.** Es sind als Rollen 3 Walzen mit konisch zugespitzten Enden in die Haltebereiche 91 des Käfigbandes 9 eingesetzt. Im Gegensatz zum Käfigband 9 der **Figur 31** werden hier zwei seitliche Käfigbänder 9 eingesetzt, und diese Bänder biegen sich derart, dass die Achsen der Rollen 3 in derselben Ebene - und auch parallel zur Ebene der Umlaufbahn 21-bleiben.

Grundsätzlich sind die verschiedenen gezeigten Varianten von Käfigbändern 9, Rollenformen, Rollenlagerungen, Rollenelementen, Distanzierungskörpern etc. in vielfältiger Weise miteinander kombinierbar.

### BEZUGSZEICHENLISTE

- 1: Zentralkörper
- 10: Rollenelement
- 12: geradliniger Abschnitt
- 13: Führungsnut
- 14: Lagernut
- 15: Bremsnase
- 16: innere Kante der Lagernut
- 17: Förderbahn
- 18: Führungssteg des Zentralkörpers
- 19: Führungsrille des Zentralkörpers
- 2: Rollenkörper
- 21: Umlaufbahn
- 22: Innenseite
- 23: Aussenseite
- 24: Laufband
- 28: Führungssteg des Laufbands
- 29: Führungsrille des Laufbands
- 3: Rolle
- 31: Lagerachse
- 32: Rollfläche
- 33: Führungselement
- 34: Lagerzapfen
- 35: Lagerband
- 36: Führungsnut an Rolle
- 4: Kettengliedplatte
- 5, 5': Gegenkörper, weiterer Gegenkörper
- 53: Führungselement
- 54: Führungssteg an Gegenkörper
- 7: Drehachse
- 71: Tragarm
- 72: Greifer
- 8: Distanzierungskörper
- 81: Haltenase
- 82: Auflagekörper
- 83: Rollenring
- 84: seitliche Distanzierungskörper
- 85: Verbindungsglied
- 86: Verbindungssteg
- 9: Käfigband
- 91: Haltebereich
- 92: Gelenkbereich
- 94: Lagerstelle
- 95: Achselement

## Patentansprüche

1. Rollenelement (10), aufweisend einen Zentralkörper (1) sowie einen Rollenkörper,
welcher Rollenkörper (2) auf einer nicht kreisförmigen Umlaufbahn um den Zentralkörper (1) verlaufend
und bezüglich des Zentralkörpers (1) durch Abrollen von Rollen (3) des Rollenkörpers (2) an einer Innenseite des Rollenkörpers (2) um den Zentralkörper (1) herum bewegbar angeordnet ist,
wobei die Rollen (3) als Kugeln oder im wesentlichen walzenförmig ausgestaltet sind,
eine Umfangsfläche der Rollen (3) zu einem wesentlichen Teil als Rollfläche (32) korrespondierend mit dem Zentralkörper (1) und zum Abrollen am Zentralkörper (1) geformt ist,
der Rollenkörper (2) ein flexibles Mittel zur Erzielung eines gleichbleibenden Abstandes zwischen den Rollen (3) aufweist, welches Lagerachsen (31) der Rollen (3) miteinander verbindet,
wobei das flexible Mittel ein Käfigband (9) ist, welches aufweist ringartige Haltebereiche (91), in welche die Rollen (3) eingesetzt sind, und Gelenkbereiche (92), welche die Haltebereiche (91) flexibel miteinander verbinden,
**dadurch gekennzeichnet, dass** der Rollenkörper (2) in sich und in seiner Beweglichkeit bezüglich des Zentralkörpers (1) ein Spiel aufweist und das Spiel des Rollenkörpers bezüglich des Zentralkörpers derart gross ist, dass sich der Rollenkörper an einer Stelle um mindestens 1/5 eines Rollendurchmessers vom Zentralkörper abheben lässt.

2. Rollenelement (10) gemäss Anspruch 1, **dadurch gekennzeichnet, dass** das Käfigband (9) einstückig aus einem Kunststoff geformt ist.

3. Rollenelement (10) gemäss Anspruch 2, **dadurch gekennzeichnet dass** an den Innenseiten der Haltebereiche (91) jeweils einander gegenüberliegende Lagerstellen (94) geformt sind, an den Rollen (3) korrespondierende Achselemente (95) geformt sind, und dass die Rollen (3) mittels der Achselemente (95) in die Lagerstellen (94) eingesetzt sind.

4. Rollenelement (10) gemäss Anspruch 3, **dadurch gekennzeichnet dass** die Lagerstellen (94) als Innenkonusse und die Achselemente (95) als Aussenkonusse geformt sind.

5. Rollenelement (10) gemäss einem der vorangehenden Ansprüche, **dadurch gekennzeichnet, dass** die Rollen (3) an einer Aussenseite des Rollenkörpers (2) an einer Seite des Zentralkörpers (1) zum Abrollen an einem Gegenkörper (5) vorgesehen sind, und zwischen dem Rollenkörper (2) und dem Gegenkörper (5) ein Band oder eine Raupenkette (24) angeordnet ist, welches um die Aussenseite des Rollenkörpers (2) herum verläuft, und am gesamten Umfang des Rollenkörpers (2) an diesem anliegt.

6. Rollenelement (10) gemäss Anspruch 1, aufweisend starre Auflagekörper (82), welche Kräfte zu einem Gegenkörper (5) aufnehmen, wobei die Auflagekörper (82) nicht miteinander verbunden sind und um eine Förderbahn (17) des Zentralkörpers (1) bewegbar und durch die Rollen (3) bezüglich des Zentralkörpers (1) gelagert sind.

7. Rollenelement (10) gemäss einem der Ansprüche 1 bis 5, **dadurch gekennzeichnet, dass** der Zentralkörper (1) eine zweifach gekrümmte Umlaufbahn aufweist.

8. Rollenelement (10) gemäss Anspruch 7, **dadurch gekennzeichnet, dass** die Umlaufbahn nebst ersten Krümmungen, die zum Umlaufen der Rollen um den Zentralkörper (1) erforderlich sind, und die im wesentlichen parallel zu Lagerachsen (31) der Rollen (3) verlaufen, eine weitere Krümmung aufweist, deren Achse im wesentlichen senkrecht zu Krümmungsachsen der ersten Krümmungen ist..

9. Rollenelement (10) gemäss einem der vorangehenden Ansprüche, **dadurch gekennzeichnet, dass** die Rollen (3) jeweils Führungselemente (33, 36) aufweisen.

10. Rollenelement (10) gemäss Anspruch 9, **dadurch gekennzeichnet, dass** die Führungselemente der Rollen (3) in Umfangsrichtung der Rollen (3) umlaufende Nuten (36) sind.

11. Rollenelement (10) gemäss Anspruch 10 und 5, **dadurch gekennzeichnet, dass** das Band oder eine Raupenkette (24) einen Führungssteg (28) aufweist, der in die umlaufenden Nuten (36) der Rollen (3) eingreift.

12. Rollenelement (10) gemäss einem der vorhergehenden Ansprüche, **dadurch gekennzeichnet, dass** die Rollen (3) zylindrisch sind und insbesondere die Form eines ausgebauchten Zylinders oder eines eingebuchteten Zylinders aufweisen.

13. Rollenelement (10) gemäss einem der Ansprüche 1 bis 11, **dadurch gekennzeichnet, dass** die Rollen (3) kugelförmig sind.

14. Rollenelement (10) gemäss einem der vorhergehenden Ansprüche, **dadurch gekennzeichnet, dass** die Rollen (3) einstückig und aus Kunststoff geformt sind.

15. Rollenelement (10) gemäss einem der vorangehenden Ansprüche, **dadurch gekennzeichnet, dass** der mindestens eine Zentralkörper (1) Mittel zum zeitweisen Festhalten von zu fördernden Gegenständen aufweist.

16. Rollenelement (10) gemäss einem der vorangehenden Ansprüche, **dadurch gekennzeichnet, dass** der Zentralkörper (1) an einer ersten Seite einen ersten kreisbogenförmigen Bahnabschnitt aufweist, und an einer zweiten, der ersten Seite gegenüberliegenden Seite einen zweiten kreisbogenförmigen Bahnabschnitt aufweist, wobei die beiden kreisbogenförmigen Bahnabschnitte konzentrisch sind.

17. Fördervorrichtung aufweisend mehrere Rollenelemente (10) gemäss einem der vorangehenden Ansprüche, wobei die Rollenelemente (10) in einer Folge angeordnet und jeweils zwei Rollenelemente (10) über ein Verbindungsglied (85) beweglich miteinander verbunden sind.

18. Lager aufweisend mindestens drei Rollenelemente gemäss Anspruch 16, wobei die Rollenelemente (10) um den Umfang eines ringförmigen Lagers zwischen zwei gegeneinander zu lagernden Körpern (5, 5') angeordnet sind.

## Claims

1. Roller element (10), comprising a central body (1) as well as a roller unit,
which roller unit (2) is arranged as running around the central body (1) on a non-circular continuous track
and as movable, relative to the central body (1), by the rolling-off of rollers (3) of the roller unit (2) on an internal side of the roller unit (2) around the central body (1),
wherein the rollers (3) are designed as balls or as essentially roller-shaped,
a circumferential surface of the rollers (3) to an essential degree is shaped as a rolling surface (32) corresponding with the central body (1) and for the rolling-off on the central body (1),
the roller unit (2) comprises a flexible means for achieving a constant spacing between the rollers (3), which connects bearing axles (31) of the rollers (3),
wherein the flexible means is a cage belt (9), which comprises ring-like holding zones (91), in which the rollers (3) are inserted, and link zones (92), which flexibly connect the holding zones (91) together,
**characterised in that** the roller unit (2) as such and in its mobility relative to the central body (1) comprises play and the play of the roller unit relative to the central body is so big that the roller unit at one location is able to be lifted off from the central body by at least 1/5 of a roller diameter.

2. Roller element (10) in accordance with claim 1, **characterised in that** the cage belt (9) is formed in one piece out of a plastic material.

3. Roller element (10) in accordance with claim 2, **characterised in that** on the internal sides of the holding zones (91) bearing points (94) respectively located opposite one another are formed, on the rollers (3) corresponding axle elements (95) are formed, and that the rollers (3) by means of the axle elements (95) are inserted into the bearing points (94).

4. Roller element (10) in accordance with claim 3, **characterised in that** the bearing points (94) are formed as inner cones and the axle elements (95) are formed as outer cones.

5. Roller element (10) in accordance with one of the preceding claims, **characterised in that** the rollers (3) on an external side of the roller unit (2) on one side of the central body (1) are adapted for rolling-off on a counter body (5), and that between the roller unit (2) and the counter body (5) a belt or a creeper chain (24) is arranged, which extends around the outside of the roller unit (2), and which touches the roller unit (2) along its entire circumference.

6. Roller element (10) in accordance with claim 1, comprising rigid supporting bodies (82), which absorb forces to a counter body (5), wherein the supporting bodies (82) are not connected together und are movable around a conveying track (17) of the central body (1) and are supported by the rollers (3) relative to the central body (1).

7. Roller element (10) in accordance with one of the claims 1 to 5, **characterised in that** the central body (1) comprises a continuous track curved two-fold.

8. Roller element (10) in accordance with claim 7, **characterised in that** the continuous track, apart from first curvatures, which are required for circulating the rollers around the central body (1), and which essentially run parallel to bearing axles (31) of the rollers (3), comprises a further curvature, the axis of which essentially is vertical to the curvature axes of the first curvatures.

9. Roller element (10) in accordance with one of the preceding claims, **characterised in that** the rollers (3) respectively comprise guide elements (33, 36).

10. Roller element (10) in accordance with claim 9, **characterised in that** the guide elements of the rollers (3) are grooves (36) extending around the circumferencel of the rollers (3).

11. Roller element (10) in accordance with claims 10 and 5, **characterised in that** the belt or a creeper chain (24) comprises a guide bridge (28), which engages the circumferential grooves (36) of the rollers (3).

12. Roller element (10) in accordance with one of the preceding claims, **characterised in that** the rollers (3) are cylindrical and in particular comprise the shape of a bulging out cylinder or of a bulging in cylinder.

13. Roller element (10) in accordance with one of the claims 1 to 11, **characterised in that** the rollers (3) are spherical.

14. Roller element (10) in accordance with one of the preceding claims, **characterised in that** the rollers (3) are in one piece and shaped of a plastic material.

15. Roller element (10) in accordance with one of the preceding claims, **characterised in that** the at least one central body (1) comprises means for temporarily holding articles to be conveyed.

16. Roller element (10) in accordance with one of the preceding claims, **characterised in that** the central body (1) on a first side comprises a first circular arc track section, and on a second side located opposite the first side comprises a second circular arc track section, wherein the two circular arc track sections are concentric.

17. Conveying device comprising several roller elements (10) in accordance with one of the preceding claims, wherein the roller elements (10) are arranged in a sequence and two roller elements (10) respectively are movably connected together through a connecting element (85).

18. Bearing comprising at least three roller elements (10) in accordance with claim 16, wherein the roller elements (10) are arranged around the circumference of a ring-shaped bearing between two counter bodies (5, 5') to be supported against one another.

## Revendications

1. Elément de roulement (10) présentant un corps central (1) ainsi qu'un corps de roulement,
lequel corps de roulement (2) s'étend autour du corps central (1) sur une piste périphérique non circulaire et est disposé par rapport au corps central (1) de manière à pouvoir se déplacer autour du corps central (1) par roulement de galets (3) du corps de roulement (2) sur un côté intérieur du corps de roulement (2),
les galets (3) ayant la configuration de billes ou une configuration essentiellement cylindrique,
une partie essentielle de la surface périphérique des galets (3) servant de surface de roulement (32) correspondant au corps central (1) et étant configurée pour rouler sur le corps central (1),
le corps de roulement (2) présentant un moyen flexible permettant de maintenir une distance constante entre les galets (3), ce moyen reliant les uns aux autres les axes de montage (31) des galets (3),
le moyen flexible étant un ruban de cage (9) qui présente des parties de maintien (91) de forme annulaire dans laquelle les galets (3) sont insérés et des parties articulées (92) qui relient les parties de maintien (91) les unes aux autres de manière flexible,
**caractérisé en ce que**
le corps de roulement (2) présente un jeu intrinsèque et un jeu dans sa mobilité par rapport au corps central (1), le jeu du corps de roulement par rapport au corps central étant suffisamment grand pour que le corps de roulement puisse en un emplacement s'écarter du corps central d'au moins 1/5 du diamètre d'un galet.

2. Elément de roulement (10) selon la revendication 1, **caractérisé en ce que** le ruban de cage (9) est réalisé d'une seule pièce en matière synthétique.

3. Elément de roulement (10) selon la revendication 2, **caractérisé en ce que** des emplacements de montage (94) opposés deux à deux et sur lesquels sont formés des éléments d'axe (95) correspondant aux galets (3) sont formés sur le côté intérieur des parties de maintien (91) et **en ce que** les galets (3) sont insérés dans les emplacements de montage (94) au moyen des éléments d'axe (95).

4. Elément de roulement (10) selon la revendication 3, **caractérisé en ce que** les emplacements de montage (94) sont configurés sous la forme de cônes intérieurs et les éléments d'axe (95) sous la forme de cônes extérieurs.

5. Elément de roulement (10) selon l'une des revendications précédentes, **caractérisé en ce que** sur un côté extérieur du corps de roulement (2), les galets (3) sont prévus sur un côté du corps central (1) pour rouler sur un corps complémentaire (5) et **en ce qu'**une bande ou chenille (24) qui s'étend autour du côté extérieur du corps de roulement (2) et qui repose contre la totalité de la périphérie du corps de roulement (2) est disposée entre le corps de roulement (2) et le corps complémentaire (5).

6. Elément de roulement (10) selon la revendication 1, présentant des corps d'appui (82) rigides qui reprennent les forces vers un corps complémentaires (5), les corps d'appui (82) n'étant pas reliés les uns aux autres, pouvant se déplacer sur une piste de transport (17) du corps central (1) et étant montés sur le corps central (1) par l'intermédiaire des galets (3).

7. Elément de roulement (10) selon l'une des revendications 1 à 5, **caractérisé en ce que** le corps central (1) présente une piste périphérique à double courbure.

8. Elément de roulement (10) selon la revendication 7, **caractérisé en ce qu'**en plus des premières courbures nécessaires pour le roulement des galets autour du corps central (1) et qui s'étendent essentiellement en parallèle aux axes de montage (31) des galets (3), la piste périphérique présente une autre courbure dont l'axe est essentiellement perpendiculaire aux axes des premières courbures.

9. Elément de roulement (10) selon l'une des revendications précédentes, **caractérisé en ce que** les galets (3) présentent tous des éléments de guidage (33, 36).

10. Elément de roulement (10) selon la revendication 9, **caractérisé en ce que** les éléments de guidage des galets (3) sont des rainures (36) qui se développent dans le sens de la périphérie des galets (3).

11. Elément de roulement (10) selon les revendications 10 et 5, **caractérisé en ce que** le ruban ou chenille (24) présente une nervure de guidage (28) qui s'engage dans la rainure périphérique (36) des galets (3).

12. Elément de roulement (10) selon l'une des revendications précédentes, **caractérisé en ce que** les galets (3) sont cylindriques et présentent en particulier la forme d'un cylindre à génératrice convexe ou d'un cylindre à génératrice concave.

13. Elément de roulement (10) selon l'une des revendications 1 à 11, **caractérisé en ce que** les galets (3) ont une forme sphérique.

14. Elément de roulement (10) selon l'une des revendications précédentes, **caractérisé en ce que** les galets (3) sont réalisés d'une seule pièce et en matière synthétique.

15. Elément de roulement (10) selon l'une des revendications précédentes, **caractérisé en ce qu'**au moins un corps central (1) présente des moyens de retenue temporaire d'objets à transporter.

16. Elément de roulement (10) selon l'une des revendications précédentes, **caractérisé en ce que** sur un premier côté, le corps central (1) présente un premier tronçon de piste en forme d'arc de cercle et sur un deuxième côté opposé au premier côté un deuxième tronçon de piste en forme d'arc de cercle, les deux tronçons de piste en forme d'arc de cercle étant concentriques.

17. Dispositif de transport présentant plusieurs éléments de roulement (10) selon l'une des revendications précédentes, les éléments de roulement (10) étant disposés en succession et deux éléments de roulement (10) étant reliés l'un à l'autre à déplacement par un organe de liaison (85).

18. Palier présentant au moins trois éléments de roulement (10) selon la revendication 16, les éléments de roulement (10) étant disposés à la périphérie d'un palier annulaire entre deux corps (5, 5') qui doivent être montés l'un contre l'autre.
